# EUROPEAN PATENT APPLICATION

(11) **EP 1 384 572 A1**
(43) Date of publication of application: **28.01.2004**
(21) Application number: 02380225.9
(22) Date of filing: 31.10.2002
(51) Int. Cl.: B32B 15/08, B32B 15/20, B32B 17/06, B32B 17/10, B44C 5/04, B44F 1/04

(54) **Opaque multilayered decorative plate**

(30) Priority: 22.07.2002 ES 200201858
(71) Applicant: Cristales Curvados, S.A. (Cricursa), 08400 Granollers (Barcelona) (ES)
(72) Inventor: Figuerola Gili, Fernando, 08400 Granollers (Barcelona) (ES)
(74) Representative: Esteban Perez-Serrano, Maria Isabel

(57) **Abstract**

The invention consists of an opaque multilayered decorative plate from among glass plates formed by superimposing two sheets, a coloured glass sheet and an aluminium sheet, joined by a transparent adhesive, preferably butyral.

## Description

### OBJECT OF THE INVENTION

The present invention relates to an opaque multilayered decorative plate having a shiny appearance, reflecting light by means of a rear aluminium sheet and allowing to include regular patterns.

This two-layer glass plate consists of two sheets, an upper glass sheet and a lower aluminium sheet attached to each other by a transparent adhesive that makes the aluminium sheet visible.

### BACKGROUND OF THE INVENTION

Glass plates are known that incorporate on their inner face a sheet acting as a solar filter.

In these glass plates the sheet is protected from the elements as it is attached to its inner face; in addition, it allows sunlight to pass filtering the rays, admitting only frequencies in the range allowed by the filter sheet.

Among this type of glass plates a specific type incorporate mirrored sheets that allow seeing through in one direction while in the opposite direction they act as a mirror.

Also known are boards made of a noble and expensive material that is coated with a protection layer to prevent damage to the expensive material.

Improvements of these boards allow reducing the thickness of the material used to provide the overall appearance, by structural reinforcements consisting of sheets of lesser value having a considerable mechanical strength.

From this structural point of view, the increased strength can also be due to a suitable combination of materials, some having a greater tensile strength and others a greater stiffnes but not being so strong.

As an example can be mentioned multilayer glass plates meant for use in vehicles.

Glass plates of this type incorporate an intermediate plastic layer that, in the event of an impact, prevents the glass from shattering and being launched towards the driver.

It is important in this type of glasses that the plastic sheet be invisible and allows light to pass, to obtain the greatest possible visibility.

In the present invention a specific layered configuration is established that uses a glass plate and an aluminium sheet to obtain a decorative plate that combines an aesthetic appearance and mechanical strength.

### DESCRIPTION OF THE INVENTION

The invention object of this memory relates to an opaque multilayered decorative plate providing a shiny appearance and allowing to show a regular pattern.

The use of glass plates is known for compartmentalisation of areas such as offices, rooms, halls, etc. where the appearance provide is one of quality and tidiness.

There are certain treated and glazed glass plates that prevent seeing through them, thus increasing the intimacy of the areas compartmentalised.

In the present invention an opaque plate is obtained that provides a striking appearance and a great strength.

Aluminium is a corrosion resistant metal, stable over time and visually pleasing.

However, aluminium sheets with low thickness cannot be used to cover areas, as they would be quickly deteriorated by creases appearing during their handling or permanently damaged by simply resting on them.

Likewise, it is an easily scraped material, such as when cleaning it.

The present invention uses a glass plate to the rear face of which is attached an aluminium sheet.

During manufacturing the controlled handling of the aluminium sheet prevents any creases from being formed.

The glass plate prevents any damage to the aluminium sheet after it is attached.

The adhesive employed is transparent, preferably butyral, and allows viewing the inner surface of the aluminium through the glass plate.

This surface can present a regular pattern, obtained by such means as chemical attack of its surface.

The appearance of the plate can be changed by using coloured glass, so that it seems that it is the aluminium sheet that is coloured.

### DESCRIPTION OF THE DRAWINGS

The present description is accompanied by a set of drawings for purposes of illustration of a preferred embodiment, and not limiting the invention.

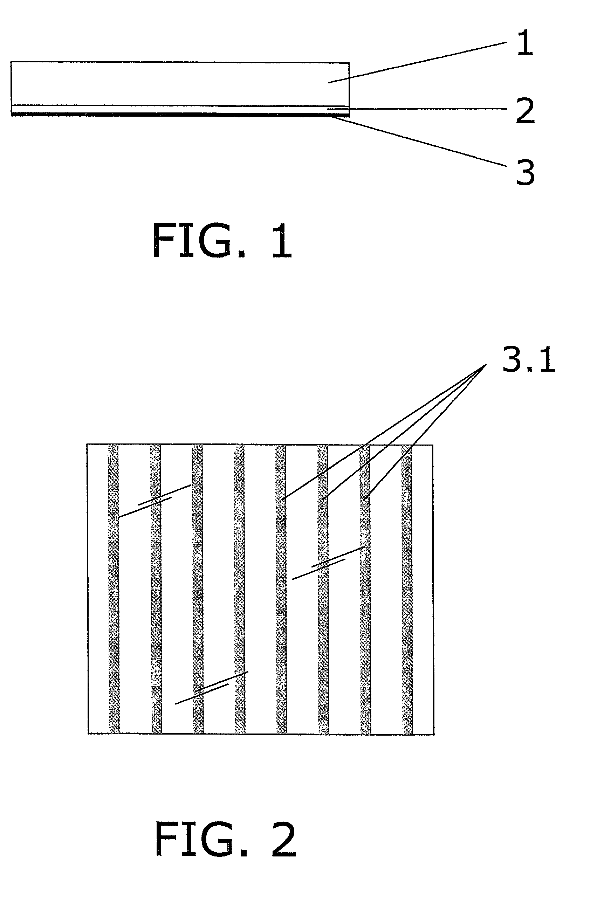

Figure 1 is a schematic representation of the layered structure of the opaque multilayer plate.

Figure 2 is a front view of the plate where by way of example a patter is shown on the visible surface of the aluminium sheet.

### PREFERRED EMBODIMENT OF THE INVENTION

In view of the above, the present invention consists of an opaque multilayered decorative plate with a shiny appearance.

The opaque multilayered decorative plate is comprised of two sheets, a top glass sheet (1) and a lower thin aluminium sheet (3).

The two sheets are joined by a transparent adhesive (2), preferably butyral, that attaches the plates to each other while allowing to see the pattern (3.1), if one is present, provided on the aluminium sheet (3).

The thickness of the aluminium sheet (3) is much less that that of the glass sheet (1), thereby reducing the overall cost. It is the glass sheet (1) that represents the majority of the thickness of the plate.

The visible face of the plate corresponds to the surface of the glass sheet (1) that allows seeing the pattern (3.1) on the aluminium sheet (3); if there is no such pattern a shiny appearance is provided that can only be achieved when the aluminium sheet (3) is protected and improved by the glass sheet (1).

The essence of this invention is not affected by variations in the materials, shape, size or arrangement of the component elements, described in a non-limiting manner so that an expert in the field should be able to reproduce the invention.

## Claims

1. Opaque multilayered decorative plate from among glass plates obtained by superimposing several sheets, **characterised in that** it consists of two sheets, a glass sheet (1) and an aluminium sheet (3) joined by a transparent adhesive (2), preferably butyral.

2. Opaque multilayered decorative plate according to claim 1, **characterised in that** the aluminium sheet (3) presents a regular pattern obtained by chemical attack (3.1) in the surface that is adjacent to the glass sheet (1) and thus is visible.

3. Opaque multilayered decorative plate according to claim 1, **characterised in that** the glass sheet (1) is coloured.
